(19) Europäisches Patentamt

European Patent Office

Office européen des brevets

(11) EP 0 555 980 B1

## (12) EUROPEAN PATENT SPECIFICATION

(45) Date of publication and mention
of the grant of the patent:
**23.10.1996  Bulletin 1996/43**

(51) Int Cl.$^6$: **C08J 3/14**, C08L 5/04

(21) Application number: **93300746.0**

(22) Date of filing: **02.02.1993**

(54) **Method for the production of true spherical polymer particles**

Herstellungsverfahren für echt kugelförmige Polymerteilchen

Procédé de préparation de particules de polymère réellement sphériques

(84) Designated Contracting States:
**DE FR GB**

(30) Priority: **10.02.1992  JP 56470/92**

(43) Date of publication of application:
**18.08.1993  Bulletin 1993/33**

(73) Proprietor: **NISSHINBO INDUSTRIES, INC.
Chuo-ku ,Tokyo (JP)**

(72) Inventors:
 • **Takenishi, Soichiro, c/o Tokyo Research Center
   Adachi-ku, Tokyo (JP)**
 • **Teramatsu, Yasuhide,
   c/o Tokyo Research Center
   Adachi-ku, Tokyo (JP)**

 • **Toizumi, Yasutoshi, c/o Tokyo Research Center
   Adachi-ku, Tokyo (JP)**

(74) Representative: **Stuart, Ian Alexander et al
   MEWBURN ELLIS
   York House
   23 Kingsway
   London WC2B 6HP (GB)**

(56) References cited:
   **EP-A- 0 180 366        EP-A- 0 213 303
   EP-A- 0 239 172        EP-A- 0 267 809
   EP-A- 0 437 360**

 • **DATABASE WPIL Derwent Publications Ltd.,
   London, GB; AN 90-242019 (32) & JP-A-2 167 301
   (RIKEN VITAMIN CO. LTD.) 27 June 1990**

## Description

The present invention relates to a method for the production of true spherical particles of a water-soluble polymer or of a cross-linked product thereof.

True spherical particles of a water-soluble polymer have good water-retaining and lubricating properties, and are therefore used as additives, binders, etc. for cosmetics, medicines, food, or the like.

However, as yet no easy method has been discovered for the production of true spherical particles of a water-soluble polymer.

A method for the production of true spherical cellulose particles exists wherein cellulose ester is dissolved in a mixture of 3 types of solvents with different boiling points, the resulting solution is spray dried, while adjusting the drying speed of the liquid drops to produce true spherical particles (Japanese Patent Application Disclosure No. 55-28763).

Further, a method exists wherein cellulose acetate chips are suspended in a medium which is then evaporated to produce true spherical particles (Japanese Patent Application Disclosure No. 53-86749).

Also, a method exists wherein a soluble cellulose derivative such as carboxymethylcellulose sodium is directly spray dried (Japanese Patent Application Disclosure No. 54-74855), but true spherical particles cannot be obtained by this direct spray drying alone.

EP-A-0 437 360 concerns the production of microspheres by reacting sodium alginate with calcium chloride to precipitate calcium alginate. The reactants may be mixed by passage of solutions through a spray gun.

EP-A-2133303 concerns the formation of "spherical" particles of polymers (e.g. alginate) by means of a two-phase liquid system, optionally in the presence of a water-soluble polymer, polyethylene glycol.

The present invention provides true spherical particles with good water-retaining and lubricating properties which may be used in cosmetics, etc., and a method for the production thereof.

## BRIEF DESCRIPTION OF THE DRAWINGS

Fig. 1 is a photograph showing the structure of true spherical particles of calcium alginate obtained in Example 1.
Fig. 2 is a photograph showing the structure of particles of calcium alginate obtained in Comparison 1.

## DETAILED DESCRIPTION OF THE INVENTION

The present invention relates to:

(1) a method for the production of true spherical particles of a water-soluble polymer, characterized by spray drying an aqueous solution containing (1) a water-soluble polymer and (2) an additive composed of an oligosaccharide or a polyhydric alcohol, in particular polyethylene glycol or erythritol;

(2) a method for the production of true spherical particles of a polymer, characterized by dispersing the true spherical particles obtained in (1) into a solvent, and then adding a crosslinking agent thereto to insolubilize the particles thereby causing precipitation thereof;

(3) a method for the production of insoluble true spherical particles of a polymer, characterized by extracting the additive composed of an oligosaccharide or a polyhydric alcohol, in particular polyethylene glycol or erythritol, from the true spherical particles obtained in (1) or (2), with a solvent. The methods of the invention may be used to prepare :

(a) true spherical sodium alginate particles whose particle size is 0.1-30 $\mu$m;
(b) true spherical particles of alginic acid reproduced by a mineral acid or organic acid, whose particle size is 0.1-30 $\mu$m;
(c) true spherical alginic acid particles which are ionicly-crosslinked with a divalent metallic ion, such as calcium ion, whose particle size is 0.1-30 $\mu$m; and
(d) true spherical particles comprising an additive composed of an oligosaccharide or a polyhydric alcohol in particular polyethylene glycol or erythritol and alginic acid which are ionicly-crosslinked with a divalent metallic ion, such as calcium ion, whose particle size is 0.1-30 $\mu$m.

The water-soluble polymers available for use according to the present invention include for example, sodium alginate, dextran, dextran sulfate sodium, carragheenan, agarose, agar, gelatin, pectin, water-soluble cellulose derivatives such as carboxymethylcellulose sodium, etc.

The above mentioned water-soluble polymers form spherical particles containing depressions, deformities, furrows, etc. and are not truly spherical if prepared as an aqueous solution of a single composition, even when spray dried.

Here, according to the present invention, it has become possible to obtain true spherical particles by adding an oligosaccharide or a polyhydric alcohol such as polyethylene glycol or erythritol as an additive to a water-soluble polymer, to prepare aqueous solution which is then spraydried.

The above mentioned oligosaccharide may be, for example, mannose (a monosaccharide), sucrose, cellobiose (disaccharides) or raffinose (a trisaccharide).

The adding proportion is preferably a near equal amount, for example about 80-120 parts by weight, for 100 parts by weight of the water-soluble polymer.

The method of spray drying may be any conventional method, for example, spraying through hot air said aqueous solution containing the water-soluble polymer and the additive at a total proportion of about 0.5-3% by weight, and a conventional spray dryer such as, for example, a disk type or double-flow nozzle type, may be used.

The disk rotation speed may be set at about 1,000-40,000 rpm.

The temperature of the hot air should be a temperature required to evaporate the moisture, preferably 80-250°C. In this manner, true spherical particles of 0.1-30 μm in size may be obtained.

The fine particles obtained above are dispersed in a solvent, for example alcohol, and then a crosslinking agent is added thereto for crosslinking to insolubilize the particles in the water and solvent and produce a precipitate.

No limits are set on the amount of the crosslinking agent used so far as it accomplishes the insolubilization of the particles. For example, 20-500 parts by weight of a crosslinking agent is added to each 100 parts by weight of the water-soluble polymer.

The crosslinking agent used may be an organic crosslinking agent such as a divinyl compound or bisepoxide, or an ionic-crosslinking agent such as calcium chloride or another divalent metal salt.

Further, said true spherical particles or their insolubilized particles may be washed with water, etc. for solvent extraction of the oligosaccharides or other added substances.

These water-soluble and insoluble fine particles may be used in any field which utilizes the properties of the polymer.

[Water absorption rate measurement method]

Approximately 0.25 g of a test sample is taken and placed into a crucible-shaped 1G5 glass filter, and 30 ml of ion-exchange water is added thereto.

The glass filter is placed in a desiccator, subjected to 50 minutes' reduced pressure of 2300 Pa, measured with a manometer using an aspirator.

Next, the glass filter is removed from the dessicator, and the water in the glass filter is removed by filtration. Then a centrifuge is used at 3000 rpm for 20 minutes to further remove the water.

Immediately after removal of the water by centrifugation, the test sample is immediately scooped out of the glass filter and weighed (a). It is then dried under reduced pressure of 50 Pa at 105°C, the absolute dry weight (b) is measured, and the water absorption rate is calculated according to the following equation:

$$\text{Water absorption rate (\%)} = \left(\frac{a-b}{b}\right) \times 100$$

[Specific surface area measurement method]

The test sample is dried under reduced pressure of 50 Pa at 100°C for 1 hours, and the specific surface area is measured using a Betasolve automatic surface area meter MODEL 4200, manufactured by Nikkiso, Inc.

[Particle size measurement method]

The particle size is measured using a laser light-scattering system HELOS & RODOS powder particle size distribution meter, manufactured by SYMPATEC Co.

[Example 1]

Sixty grams of sodium alginate (Duckalgin NSPLL) manufactured by Kibun Food Chemifa, Inc. and 60 g of sucrose (reagent special grade) manufactured by Kokusan Chemicals, Inc. were added to 6 l of water and the mixture was stirred to dissolve the sodium alginate and sucrose, after which the solution was defoamed under reduced pressure of 2300 Pa with an aspirator to remove the air bubbles from the aqueous solution.

The viscosity of the solution at this time was measured with an ultrasonic vibrating viscometer Viscomate (MODEL VM-1A, manufactured by Yamaichi Denki, Inc.) and found to be 26.6 cP.

The above mentioned aqueous solution was spray dried using a mobile minor spray drier (manufactured by Ashizawa Niroatomizer, Inc.), and 62 g of true spherical sodium alginate/sucrose composite particles were obtained. The average particle size thereof was 3.54 μm, and the maximum particle size was 16.75 μm.

To the 62 g of the true spherical sodium alginate/sucrose composite particles obtained in this manner were added 200 ml of isopropyl alcohol, and the solution was stirred for 10 seconds with an ultradisperser (MODEL LK-22, manufactured by Yamato Kagaku, Inc.), to disperse the true spherical sodium alginate/sucrose composite particles in the isopropyl alcohol.

This dispersion was then introduced, while stirring, at 20°C into 500 ml of an aqueous solution of 20% by weight of calcium chloride (reagent special grade, anhydrous salt, manufactured by Wako Junyaku, Inc.), and the stirring was continued for one hour with a magnetic stirrer to crosslink the sodium alginate with calcium ions.

Next, the dispersion was filtered through a 17G5 glass filter, the precipitate formed was dispersed in 200 ml of water, and the resulting solution was placed in a cellulose dialysis tube, for dialysis against running water for 3 days.

After removal of the water using a 17G5 glass filter, the filter cake was added to 200 ml of isopropyl alcohol, and the solution was stirred for 10 seconds with an ultradisperser, and upon dispersion of the particles the solution was allowed to stand for one hour.

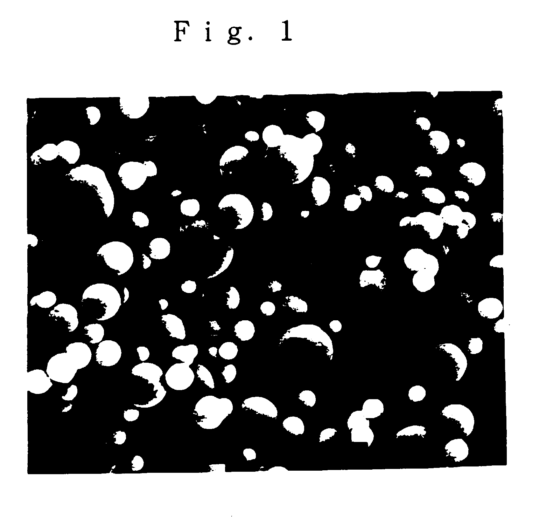

Filtration with a glass filter was repeated, followed by drying under reduced pressure of 50 Pa at 60°C. The properties of the true spherical calcium alginate particles obtained in this manner are listed in Table 1. Also, a photograph of the structure of the obtained true spherical calcium alginate particles is shown in Fig. 1.

[Table 1]

Table 1

| | |
|---|---|
| Average particle size [μm] | 3.16 |
| Maximum particle size [μm] | 14.60 |
| Water absorption rate [%] | 177 |
| Specific surface area [m2/g] | 2.58 |

[Example 2]

Sixty grams of true spherical sodium alginate/sucrose composite particles obtained in the same manner as in Example 1 were dispersed in 200 ml of isopropyl alcohol, in the same manner as in Example 1, and to the dispersion was added 320 ml of a 6.25% by weight aqueous solution of sulfuric acid while stirring with a magnetic stirrer, and stirring was continued for one hour.

Next, this dispersion was separated by filtration with a 17G5 glass filter, and about 5 l of water were poured over the glass filter for washing.

After the washed particles were dehydrated using a glass filter, they were added to 200 ml of isopropyl alcohol, and the solution was stirred for 10 seconds with an ultra disperser and was left to stand for one hour after dispersion of the particles.

Filtration with a glass filter was repeated, followed by drying under reduced pressure of 50 Pa at 60°C to obtain insoluble true spherical alginic acid particles.

[Comparison 1]

Sixty grams of 300-400 cP (Wako grade 1) sodium alginate manufactured by Wako Junyaku, Inc. were added to 6 l of water, and preparation was made of an aqueous solution (solution viscosity of 56 cP) in the same manner as in Example 1, and the solution was spray dried to obtain 25 g of sodium alginate particles.

The sodium alginate particles obtained in this manner were either bowl-shaped or spherical with depressions.

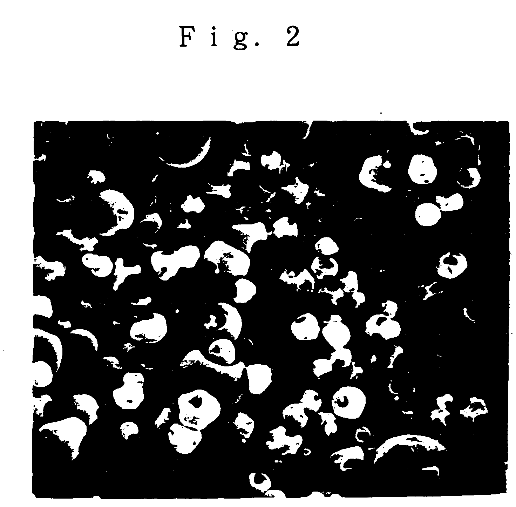

Next, the sodium alginate particles were crosslinked with calcium ions in the same manner as in Example 1 to obtain calcium alginate particles. A photograph of the structure of these obtained calcium alginate particles is shown in Fig. 2.

[Example 3]

Twenty grams of carboxymethylcellulose sodium salt (Sunrose APP-84) manufactured by Sanyo Kokusaku Pulp, Inc. and 20 g of sucrose (reagent special grade) manufactured by Kokusan Chemicals, Inc., were added to 2 l of water, and the mixture was stirred to dissolve the carboxymethylcellulose sodium salt and the sucrose.

The viscosity of the solution at this time was measured with the same viscometer as used in Example 1, and found to be 6 cP or less.

The above mentioned aqueous solution was spray dried with the same spray drier as used in Example 1, to obtain 12.8 g of true spherical carboxymethylcellulose sodium salt/sucrose composite particles.

The true spherical carboxymethylcellulose sodium salt/sucrose composite particles obtained in this manner had an average particle size of 5.72 μm, and a maximum particles size of 14.02 μm.

[Comparison 2]

Twenty grams of carboxymethylcellulose sodium salt (Sunrose APP-84) manufactured by Sanyo Kokusaku Pulp, Inc. was added to 2 l of water, and an aqueous solution was prepared in the same manner as in Example 3 (solution viscosity of 6 cP or less), and

spray drying was done under the same conditions as in Example 3 to obtain 4.7 g of carboxymethylcellulose sodium salt particles.

The carboxymethylcellulose sodium salt particles obtained in this manner were either bowl-shaped or spherical with depressions.

[Example 4]

Twenty grams of dextran (M.W. = 60,000 - 90,000) manufatured by Wako Junyaku, Inc. and 20 g of sucrose (reagent special grade) manufactured by Kokusan Chemicals, Inc., were added to 2 l of water, and an aqueous solution was prepared in the same manner as in Example 3 (solution viscosity of 6 cP or less), and spray drying was done with the same spray dryer used in Example 1, to obtain 5.3 g of true spherical dextran/sucrose composite particles.

The true spherichal dextran/sucrose composite particles obtained in this manner had an average particle size of 5.23 μm, and a maximum particle size of 14.50 μm.

[Example 5]

To 30 g of true spherical dextran/sucrose composite particles obtained in the same manner as in Example 4 were added 300 ml of methanol, and the solution was stirred for 10 seconds with an ultradisperser to disperse the true spherical dextran/sucrose composite particles in the methanol.

To this dispersion were added 50 ml of a 50% by weight aqueous solution of sodium hydroxide, and stirring with the ultradisperser was repeated for 10 seconds to disperse the particles, after which the solution was allowed to stand at room temperature for one day.

Next, the precipitate from the above mentioned dispersion was filtered off with a glass filter, and added to 300 ml of acetone, and dispersion was effected with an ultradisperser.

To this was added 54 g of epichlorohydrin (reagent special grade, manufactured by Wako Junyaku, Inc.), and the solution was refluxed for one day with an oil bath at 70°C.

The above mentioned solution was filtered with a glass filter, to obtain a precipitate of crosslinked and insolubilized true spherical dextran sodium particles.

The precipitate was added to 200 ml of a 4% by weight aqueous solution of sulfuric acid, and the solution was neutralized and then filtered and washed with about 4 l of water.

The washed particles were dehydrated using a glass filter, dispersed in 2 l of methanol and stirred with a magnetic stirrer for 5 hours, after which the solution was filtered with a glass filter and dried under reduced pressure of 50 Pa at 80°C to reproduce neutralized and insolubilized true spherical dextran particles.

(Comparison 3]

Twenty grams of dextran (M.W. = 60,000 - 90,000) manufactured by Wako Junyaku, Inc. were added to 2 l of water, and an aqueous solution was prepared in the same manner as in Example 3 (solution viscosity of 6 cP or less), and spray dried under the same conditions as in Example 4 to obtain dextran particles.

The dextran particles obtained in this manner were bowl-shaped or spherical with depressions.

[Example 6]

Twenty grams of polyvinyl pyrrolidone (K-30) manufactured by Wako Junyaku, Inc. and 20 g of sucrose (reagent special grade) manufactured by Kokusan Chemicals, Inc. were added to 2 l of water, to prepare an aqueous solution in the same manner as in Example 3 (solution viscosity of 6 cP or less), and spray drying was done under the same conditions in Example 3 to obtain 9.8 g of true spherical polyvinyl pyrrolidone/sucrose composite particles.

The true spherical polyvinyl pyrrolidone/sucrose composite particles obtained in this manner had an average particle size of 4.40 µm, and a maximum particle size of 12.40 µm.

[Comparison 4]

Twenty grams of polyvinyl pyrrolidone (K-30) manufactured by Wako Junyaku, Inc. were added to 2 l of water to prepare an aqueous solution in the same manner as in Example 3 (solution viscosity of 6 cP or less), and spray drying was done under the same conditions in Example 3 to obtain polyvinyl pyrrolidone particles.

The polyvinyl pyrrolidone particles obtained in this manner were bowl-shaped or spherical with depressions.

[Example 7]

Twenty grams of dextran sulfate sodium (from dextran with an average M.W. of 5000) manufactured by Sigma Chemical Co. and 20 g of sucrose (reagent special grade) manufactured by Kokusan Chemicals, Inc. were added to 2 l of water to prepare an aqueous solution in the same manner as in Example 3 (solution viscosity of 6 cP or less), and spray drying was done under the same conditions in Example 3 to obtain 12.1 g of true spherical dextran sulfate sodium/sucrose composite particles.

The true spherical dextran sulfate sodium/sucrose composite particles obtained in this manner had an average particle size of 5.03 µm, and a maximum particle size of 13.23 µm.

[Comparison 5]

Fifty grams of dextran sulfate sodium (from dextran with an average M.W. of 5000) manufactured by Sigma Chemical Co. were added to 5 l of water to prepare an aqueous solution in the same manner as in Example 3 (solution viscosity of 6 cP or less), and spray drying was done under the same conditions in Example 3 to obtain 18.0 g of dextran sulfate sodium particles.

The dextran sulfate sodium particles obtained in this manner were bowl-shaped or spherical with depressions.

[Example 8]

Ten grams of pullulan (MW: ca. 200,000) manufactured by Tokyo Kasei, Inc. and 10 g of sucrose (reagent special grade) manufactured by Kokusan Chemicals, Inc. were added to 1 l of water to prepare an aqueous solution in the same manner as in Example 3 (solution viscosity of 6 cP or less), and spray drying was done under the same conditions in Example 3 to obtain 5.1 g of true spherical pullulan/sucrose composite particles.

The true spherical pullulan/sucrose composite particles obtained in this manner had an average particle size of 7.67 µm, and a maximum particle size of 20.28 µm.

[Comparison 6]

Ten grams of pullulan (M.W.: ca. 200,000) manufactured by Tokyo Kasei, Inc. were added to 1 l of water to prepare an aqueous solution in the same manner as in Example 3 (solution viscosity of 6 cP or less), and spray drying was done under the same conditions in Example 3 to obtain 3.4 g of pullulan particles.

The pullulan particles obtained in this manner were bowl-shaped or spherical with depressions.

[Example 9]

Ten grams of carragheenan (M.W. = 300,000) manufactured by Tokyo Kasei, Inc. and 10 g of sucrose (reagent special grade) manufactured by Kokusan Chemicals, Inc. were added to 1 l of water, to prepare an aqueous solution in the same manner as in Example 1 (solution viscosity of 43.1 cP), and spray drying was done under the same conditions in Example 3 to obtain 7.6 g of true spherical carragheenan/sucrose composite particles.

The true spherical carragheenan/sucrose composite particles obtained in this manner had an average particle size of 9.60 µm, and a maximum particle size of 29.11 µm.

[Comparison 7]

Twenty-five grams of carragheenan (M.W. = 300,000) manufactured by Tokyo Kasei, Inc. were added to 2.5 l of water to prepare an aqueous solution in the same manner as in Example 1 (solution viscosity of 32.9 cP), and spray drying was done under the same conditions in Example 3 to obtain 10.9 g of carragheenan particles.

The carragheenan particles obtained in this manner were bowl-shaped or spherical with depressions.

[Example 10]

One gram of agarose (SEA KEM ME) manufactured by FMC Corporation and 1.0 g of sucrose (reagent special grade) manufactured by Kokusan Chemicals, Inc. were added to 2 l of water, and stirring was done while heating with a water bath at about 90°C (Water Bath MODEL BM-42, manufactured by Yamato Kagaku, Inc.) to dissolve the agarose and sucrose.

The above mentioned aqueous solution was then heated in a 73-76°C water bath, while spray drying with the spray dryer used in Example 1, to obtain 0.5 g of true spherical agarose/sucrose particles. The true spherical agarose/sucrose composite particles obtained in this manner had an average particle size of 3.34 μm, and a maximum particle size of 7.40 μm.

[Comparison 8]

One gram of agarose (SEA KEM ME) manufactured by FMC Corporation was added to 2 l of water to prepare an aqueous solution in the same manner as in Example 10.

The above mentioned aqueous solution was spray dried under the same conditions in Example 10 while heating with a 73-76°C water bath, to obtain agarose particles.

The agarose particles obtained in this manner were bowl-shaped, or spherical with large depressions.

[Example 11]

Ten grams of chitosan (90 M, for biochemical use) and 5.3 g of monochloroacetic acid (reagent special grade), both manufactured by Wako Junyaku, Inc., and 10 g of sucrose (reagent special grade) manufactured by Kokusan Chemicals, Inc. were added to 1 l of water to prepare an aqueous solution in the same manner as in Example 1 (solution viscosity of 83.6 cP), and spray drying was done under the same conditions in Example 1 to obtain 8.9 g of true spherical chitosan/monochloroacetic acid/sucrose composite particles.

The true spherical chitosan/monochloroacetic acid/sucrose composite particles obtained in this manner had an average particle size of 8.73 μm, and a maximum particle size of 22.15 μm.

[Comparison 9]

Ten grams of chitosan (90 M, for biochemical use) and 5.3 g of monochloroacetic acid (reagent special grade), both manufactured by Wako Junyaku, Inc., were added to 1 l of water to prepare an aqueous solution in the same manner as in Example 1 (solution viscosity of 80.0 cP), and spray drying was done under the same conditions in Example 1 to obtain 5.0 g of chitosan/monochloroacetic acid composite particles.

The chitosan/monochloroacetic acid composite particles obtained in this manner were spherical but contained wrinkles.

[Example 12]

Ten grams of sodium alginate (Duckalgin NSPLL) manufactured by Kibun Food Chemifa, Inc. and 10 g of D(+) mannose (reagent special grade) manufactured by Wako Junyaku, Inc. were added to 1 l of water to prepare an aqueous solution in the same manner as in Example 1 (solution viscosity of 30.6 cP), and spray drying was done under the same conditions in Example 1 to obtain 4.1 g of true spherical sodium alginate/mannose composite particles.

The true spherical sodium alginate/mannose composite particles obtained in this manner had an average particle size of 4.71 μm, and a maximum particle size of 20.60 μm.

[Example 13]

Ten grams of sodium alginate (Duckalgin NSPLL) manufactured by Kibun Food Chemifa, Inc. and 10 g of D(+) raffinose pentahydrate manufactured by Tokyo Kasei, Inc. were added to 1 l of water to prepare an aqueous solution in the same manner as in Example 1 (solution viscosity of 30.1 cP), and spray drying was done under the same conditions in Example 1 to obtain 9.6 g of true spherical sodium alginate/raffinose composite particles.

The true spherical sodium alginate/raffinose composite particles obtained in this manner had an average particle size of 5.15 μm, and a maximum particle size of 24.62 μm.

[Example 14]

Twenty grams of sodium alginate (Duckalgin NSPLL) manufactured by Kibun Food Chemifa, Inc. and 20 g of erythritol manufactured by Mitsubishi Kasei, Inc. were added to 2 l of water to prepare an aqueous solution in the same manner as in Example 1 (solution viscosity of 28.8 cP), and spray drying was done with the same spray dryer as in Example 1, to obtain 5.9 g of true spherical sodium alginate/erythritol composite particles.

The true spherical sodium alginate/erythritol composite particles obtained in this manner had an average particle size of 3.07 μm, and a maximum particle size of 14.27 μm.

[Example 15]

Twenty grams of sodium alginate (Duckalgin NSPLL) manufactured by Kibun Food Chemifa, Inc. and 20 g of polyethylene glycol (#6000) manufactured by Kokusan Chemicals, Inc. were added to 2 l of water to prepare an aqueous solution in the same manner as in Example 1 (solution viscosity of 32.2 cP), and spray drying was done with the same spray dryer as in Example 1, to obtain 0.3 g of true spherical sodium alginate/polyethylene glycol composite particles.

The true spherical sodium alginate/polyethylene glycol composite particles obtained in this manner had an average particle size of 2.96 μm, and a maximum particle size of 6.37 μm.

[Example 16]

Ten grams of sodium alginate (Duckalgin NSPLL) manufactured by Kibun Food Chemifa, Inc. and 10 g of β-D(+) cellobiose manufactured by Sigma Chemical Co. were added to 1 l of water to prepare an aqueous solution in the same manner as in Example 1 (solution viscosity 30.8 cP), and spray drying was done with the same spray dryer as in Example 1, to obtain true spherical sodium alginate/cellobiose composite particles.

The true spherical sodium alginate/cellobiose composite particles obtained in this manner had an average particle size of 4.31 μm, and a maximum particle size of 16.41 μm.

As described above, according to the present invention it is possible to efficiently produce true spherical fine particles of 0.1 - 30 μm.

[Example 17]

The 60g of the true spherical sodium alginate/sucrose composite particles obtained in the same manner as in Example 1 were added to 500 ml of an aqueous solution of 20% by weight of calcium chloride (reagent special grade, anhydrous salt, manufactured by Wako Junyaku, Inc.) at 20°C, while stirring, and the stirring was continued for one hour with a magnetic stirrer to crosslink the sodium alginate with calcium ions.

Next, the dispersion was filtered through a 17G5 glass filter, the precipitate formed was dispersed in 200 ml of water, and the resulting solution was placed in a cellulose dialysis tube, for dialysis against runnung water for 3 days.

After removal of the water using a 17G5 glass filter, the filter cake was added to 200 ml of isopropyl alcohol, and the solution was stirred for 10 seconds with an ultradisperser, and upon dispersion of the particles the solution was allowed to stand for on hour.

Filtration with a glass filter was repeated, followed by drying under reduced pressure of 50 Pa at 60°C.

The properties of the true spherical calcium alginate particles obtained in this manner are listed in table 2.

[Table 2]

| | |
|---|---|
| Average particle size[μm] | 3.36 |
| Maximum particle size[μm] | 15.2 |
| Water absorption ratio[%] | 1.68 |
| Specific surface area[m$^2$/g] | 2.25 |

**Claims**

1. A method for the production of true spherical particles of a water-soluble polymer, characterized by spray drying an aqueous solution containing (1) a water-soluble polymer and (2) an additive composed of an oligosaccharide or a polyhydric alcohol dissolved therein.

2. A method for the production of true spherical particles of a polymer comprising dispersing the true spherical particles obtained according to Claim 1 into a solvent, and then adding a crosslinking agent thereto to insolubilize the particles thereby causing precipitation thereof.

3. A method for the production of true spherical particles of an insoluble polymer comprising extracting the additive composed of an oligosaccharide or other polyhydric alcohol, from the true spherical particles obtained according to Claim 1 or 2, with a solvent.

4. A method according to any preceding claim wherein said additive is polyethylene glycol or erythritol.

**Patentansprüche**

1. Verfahren zur Herstellung genau kugelförmiger Teilchen eines wasserlöslichen Polymers, gekennzeichnet durch das Sprühtrocknen einer wäßrigen Lösung, die darin gelöst (1) ein wasserlösliches Polymer und (2) ein Additiv enthält, das aus einem Oligosaccharid oder einem mehrwertigen Alkohol besteht.

2. Verfahren zur Herstellung genau kugelförmiger Teilchen eines Polymers, umfassend das Dispergieren der gemäß Anspruch 1 erhaltenen genau kugelförmigen Teilchen in ein Lösungsmittel und das anschließende Hinzufügen eines Vernetzungsmittels, um die Teilchen zu insolubilisieren, wodurch deren Fällung bewirkt wird.

3. Verfahren zur Herstellung genau kugelförmiger Teilchen eines unlöslichen Polymers, umfassend das Extrahieren des aus einem Oligosaccharid oder einem anderen mehrwertigen Alkohol bestehenden Additivs aus den gemäß Anspruch 1 oder 2 erhaltenen genau kugelförmigen Teilchen mit einem Lösungsmittel.

4. Verfahren nach einem der vorhergehenden Ansprüche, worin das Additiv Polyethylenglykol oder Erythrit ist.

**Revendications**

1. Méthode pour la production de particules réellement sphériques d'un polymère soluble dans l'eau, caractérisée par le séchage par pulvérisation d'une solution aqueuse contenant (1) un polymère soluble dans l'eau et (2) un additif composé d'un oligosaccharide ou d'un alcool polyhydrique qui y est dissous.

2. Méthode pour la production de particules réellement sphériques d'un polymère consistant à disperser les particules réellement sphériques obtenues selon la revendication 1 dans un solvant puis à y ajouter un agent réticulant pour insolubiliser les particules et ainsi provoquer leur précipitation.

3. Méthode pour la production de particules réellement sphériques d'un polymère insoluble consistant à extraire l'additif composé d'un oligosaccharide ou d'un autre alcool polyhydrique, des particules réellement sphériques obtenues selon la revendication 1 ou 2, avec un solvant.

4. Méthode selon toute revendication précédente, où ledit additif est du polyéthylène glycol ou de l'érythritol.

F i g. 1

F i g . 2